Europäisches Patentamt

European Patent Office

Office européen des brevets

(11) Publication number: **0 382 955**
A1

# EUROPEAN PATENT APPLICATION

(21) Application number: 89301390.4

(51) Int. Cl.⁵: **F16D 41/06**

(22) Date of filing: 14.02.89

(43) Date of publication of application:
22.08.90 Bulletin 90/34

(84) Designated Contracting States:
BE DE ES FR GB IT NL SE

(71) Applicant: **Coales, Peter J.**
**20 Herriots Lane**
**Wellingborough Northants NN8 4PU(GB)**

(72) Inventor: **Coales, Peter J.**
**20 Herriots Lane**
**Wellingborough Northants NN8 4PU(GB)**

(74) Representative: **Goodenough, Nigel et al**
**A.A. Thornton & Co. Northumberland House**
**303-306 High Holborn**
**London WC1V 7LE(GB)**

(54) **Roller clutch.**

(57) In a roller clutch having an outer race (10), and inner race (11) and rollers (14), the rollers (14) are biased towards the narrow end of each tapering zone formed between the races by a leaf spring (15). The leaf spring is secured to the inner race and extends radially outwardly to a reverse bend and then inwardly to engage the roller.

Fig 2

## ROLLER CLUTCH

This invention relates to a roller clutch, that is to say a clutch having inner and outer races separated by rollers which, in one relative direction of rotation of the inner and outer races, permit free rotation of the races relative to each other, but which in the event of an attempt to move the races in the opposite relative direction, lock the races together to permit torque to be transmitted by the clutch. Such clutches have a range of industrial applications, for example to provide indexing drive, to permit over-run of a driven member relative to the driving member, and as a backstop to prevent undesirable reverse rotation.

In a conventional roller clutch each roller is biased into engagement with the inner and outer races by a spring loaded plunger located in a bore in the inner race. This arrangement is expensive to manufacture and has the disadvantage that the rollers must be located at a relatively large angular spacing so that the material of the inner race can extend into the zone between each pair of adjacent rollers to provide the bore for reception of the spring loaded plunger. The relatively wide angular spacing of the rollers limits the number of rollers which can be incorporated between the races, which in turn limits the torque which can be transmitted by the clutch.

According to one aspect of the present invention a roller clutch comprises inner and outer races one of which is formed with a plurality of ramp surfaces each defining with the other race a tapering zone in which is located a roller, wherein each roller is biased towards the narrow end of its associated tapering zone by a leaf spring secured to said one of the races and extending in a direction substantially radially of the bearing into the zone between adjacent rollers.

By replacing the substantially tangentially oriented spring loaded plunger of the prior art by a leaf spring which extends substantially radially, the prior art requirement for the inner race to extend substantially into the zone between adjacent rollers is removed, with the result that the rollers can be more closely packed enabling more rollers to be located between the races for a given outer race diameter. This fact, combined with the fact that the leaf spring arrangement permits considerable simplification in the formation of the non-circular race enables a substantial increase in torque capacity to be obtained at no increase in price as compared with the prior art clutches. Alternatively, a given torque capacity can be provided substantially more cheaply than has been the case with prior art roller clutches.

The invention will be better understood from the following description of a prior art roller clutch and embodiments of the present invention, reference being had to the accompanying drawings wherein:

Figure 1 is a schematic view of a prior art roller clutch;

Figure 2 is a view corresponding to Figure 1 of an embodiment of the present invention;

Figure 3 is a cross-section on the line A-A of Figure 2;

Figure 4 is an exploded view showing the location of a leaf spring;

Figures 5 and 6 illustrates two other methods of spring retention using modified springs;

Figures 7 and 8 are respectively cross-sections on the lines B-B and C-C of Figures 5 and 6; and

Figure 9 illustrates to a larger scale a blank from which the spring illustrated in Figure 5 may be formed.

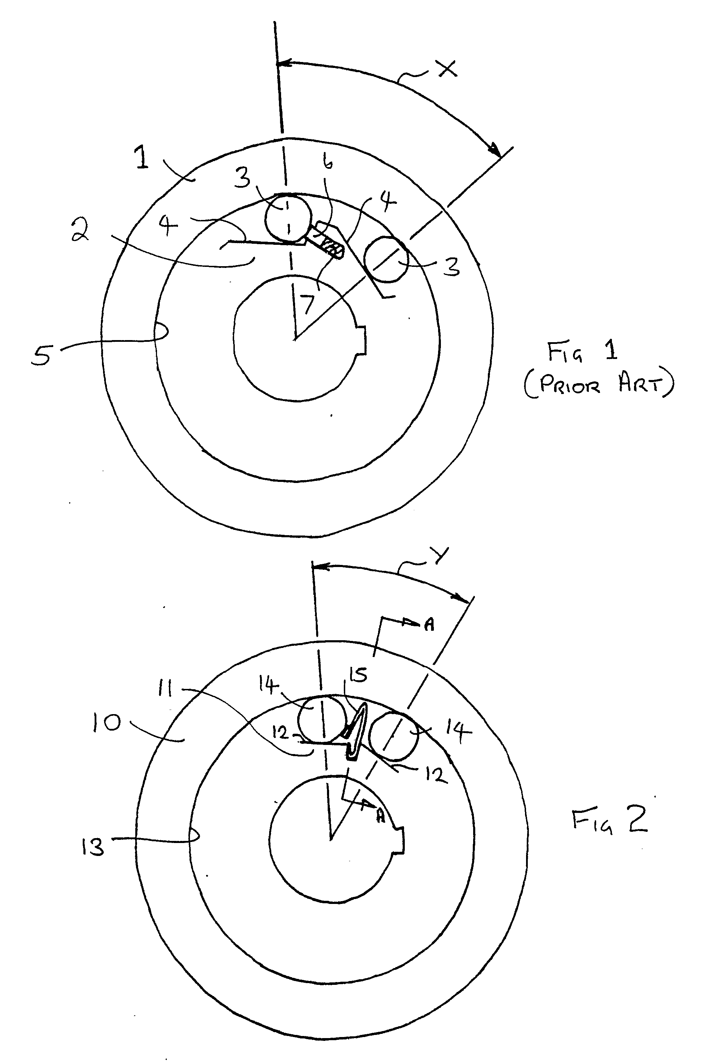

Referring firstly to Figure 1 a prior art roller clutch is shown comprising an outer race 1 and an inner race 2 having mounted therebetween a plurality of rollers 3. Only a portion of the inner race and associated rollers is shown.

The inner race 2 includes a plurality of ramp surfaces 4 which define with the circular inner surface 5 of the outer race 1 a plurality of tapering zones each of which houses a roller 3. The rollers 3 are biased towards the narrow part of their associated tapering zones by a plunger 6 loaded by a spring 7 located within a bore in the inner race. The line of action of the plunger 6 is substantially tangential relative to the axis of rotation of the bearing, and as a result a portion of the inner race must extend into the zone between adjacent rollers 3 in order to provide material in which the plunger bore can be formed. As a result, a relatively large angular separation X of the rollers must be accepted, with the result that relatively few rollers can be located between the races.

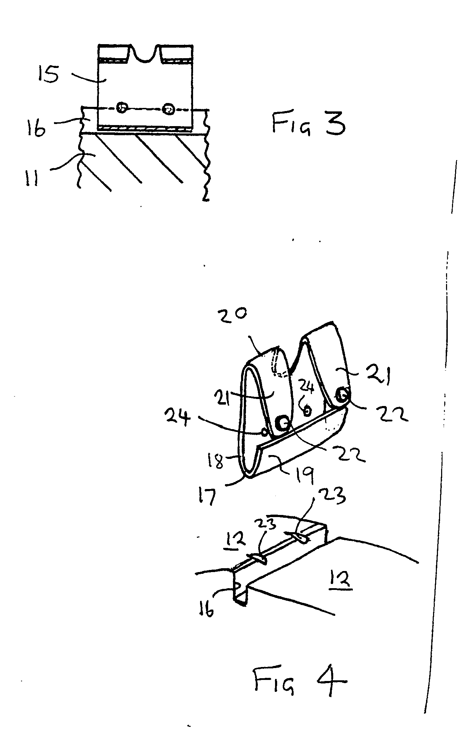

Referring now to Figure 2 there is shown an embodiment of the invention in which the roller clutch includes an outer race 10 and an inner race 11 (only a portion of which is illustrated). The inner race 11 defines a plurality of ramp surfaces 12 to define with the inner surface 13 of the outer race a plurality of tapering zones each of which houses a roller 14. Each roller 14 is biased towards the narrow end of its associated tapering zone by a leaf spring 15 illustrated in more detail in Figures 3 and 4.

Each leaf spring 15 is formed from sheet material and is seated in a groove 16 formed in the inner race between adjacent ramp surfaces 12. The radially innermost portion of the spring 15 is formed with a reverse bend 17 to form two legs 18,19 to be snugly received between opposite walls of the groove 16. Each spring 15 extends substantially radially relative to the axis of rotation of the bearing and includes, at its radially outer extremity, a reverse bend 20. From the bend 20 two arms 21 extend in a substantially radial direction inwardly towards the inner race. A pad 22 is mounted adjacent the free end of each arm 21 for engaging the associated roller to bias the roller into the narrow end of its tapering region.

The springs 15 are positively locked into their associated groove 16 by projections 23 formed at the juncture of the groove 16 and the adjacent ramp surface 12. The projections 23 may be formed by any suitable means, for example by running the inner race against a non-cutting tool to deform he inner race to produce the projections illustrated. The projections 23 seat in holes 24 formed in the limb 18 of the spring 15 to retain the spring in position against accidental displacement and against displacement due to rotational forces on the spring in use.

It will be observed from Figure 2 that the use of a substantially radially extending leaf spring obviates the requirement of the prior art to provide material of the inner race in the zone between adjacent rollers. As a result, the angular spacing Y of the rollers which can be achieved with an embodiment of the invention is substantially less than that which could be obtained in the case of the prior art. Also, a clutch provided with a leaf spring seated and retained as described above is considerably less expensive to manufacture than a clutch having the spring loaded plunger arrangement of the prior art. As a result, for a given outer race diameter a roller clutch having more rollers than the prior art can be produced for the same or a lesser price. Such a roller clutch will have a substantially higher torque capacity than a comparable diameter clutch of the prior art.

In addition to providing for a particularly simple and secure means of locating a retaining spring, the arrangement described above has the advantage that any one spring, or all the springs, can readily be replaced by suitable manipulation.

Under some circumstances, it may be desirable to provide a roller-engaging surface which extends across the full width of the race, in which case the groove between the arms 21 may be omitted, whereby a single wide arm extends radially inwardly from the reverse bend 20, or the groove between the arms 21 may be replaced by an elongate aperture which does not extend as far as the free edge of the arms 21, whereby a continuous roller engaging surface is provided across the full width of the spring, whilst two separate arms are provided connecting the roller engaging surface to the leg 18 of the spring.

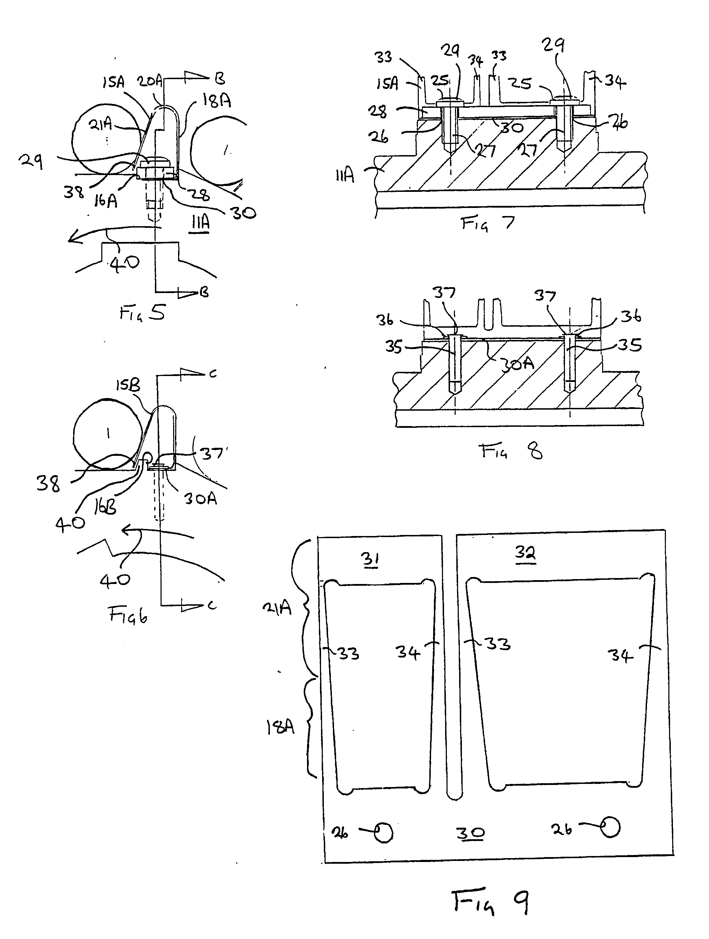

A modified embodiment of the invention is illustrated in Figures 5 and 7. In this embodiment the spring 15A is secured in groove 16A by means of screws 25 each of which passes through a respective clearance hole 26 in the spring 15A, and is screwed into a respective threaded hole 27 provided in the inner race 11A. A clamping bar 28 is positioned between the head 29 of each screw and a flat portion 30 of the spring so that the flat portion 30 is firmly clamped between the bar 28 and the base of the groove 16A. With this method of securement, the flat portion 30 extend substantially at right angles to the leg 18A of the spring, and the requirement for the spring to fit snugly within the inner race groove is obviated.

In the embodiment of Figures 5 and 7 the pads 22 of the previous embodiment have been omitted, and the arms 21A engage the rollers directly. The roller engaging portion of the arms 21A may be flat as illustrated or made convex or concave by suitable bending of the spring.

A blank from which the spring 15A may be formed is shown in Figure 9. The blank may be stamped from suitable material, e.g. hard phosphor bronze, and bent into the desired shape. It will be noted that in contrast to the spring of Figures 2-4, the spring 15A of Figures 5 and 7 formed from the blank of Figure 9 includes two relatively large roller engaging portions 31,32 each of which is connected by two thin arms 33,34 to the flat portion 30. Each roller engaging portion 31,32 and its associated arms 33,34 accordingly acts as an individual spring. The arrangement of Figures 5 and 7 is accordingly particularly suitable for use in a roller clutch in which two rollers are located end-to-end between each ramp surface and the adjacent surface of the other race. It should be appreciated however that a solid leg similar to the leg 18 of the embodiment of Figures 2-4 may be provided between the flat portion 30 and the arms 33,34, and the arms 33,34 appropriately shortened, if desired.

It will be appreciated that the spring securing arrangement described above with reference to Figure 5 may be used in place of or in addition to the arrangement shown in Figures 2-4, and that the pads 22 of Figures 2-4 may be employed in a spring of the general type shown in Figure 5 in place of the roller engaging portions 31,32.

The spring 15B illustrated in Figures 6 and 8 is substantially the same as that of Figures 5 and 7 but is retained in its associated groove 16B by one or more tension pins 35, e.g. as sold under the Trade Mark SPIROL. A washer, e.g. a belleville disc spring 36 is preferably positioned between an outwardly flared end 37 of the or each pin and the flat portion 30A of the spring 15B.

In the embodiments of Figures 5 and 6 the free end 38 of the spring is positioned such that after a predetermined deflection of the spring the free end will abut a stop formed by the bar 28 in the case of the Figure 5 embodiment and by a step 39 formed on the inner race in the case of the Figure 6 embodiment. This ensures that the springs are not excessively deflected upon acceleration of the inner race in the direction of the arrow 40 (Figures 5 and 6).

## Claims

1. A roller clutch comprising inner and outer races one of which is formed with a plurality of ramp surfaces each defining with the other race a tapering zone in which is located a roller, wherein each roller is biased towards the narrow end of its associated tapering zone by a leaf spring secured to said one of the races and extending in a direction substantially radially of the bearing into the zone between adjacent rollers.

2. A roller clutch according to claim 1 wherein an end region of the spring is secured to the said one of the races, the end region being generally U-shaped in cross-section and being a snug fit within a groove formed in the said one of the races.

3. A roller clutch according to claim 2 wherein the said one of the races is formed with at least one projection with engages a corresponding hole in the spring to lock the spring in position.

4. A roller clutch according to claim 1 wherein the spring is secured to the said one of the races by pins or screw threaded fasteners.

5. A roller clutch according to any preceding claim wherein the spring extends radially from the point where it is connected to the the said one of the races to a reverse bend and extends radially from the reverse end to a portion which engages the associated roller.

6. A roller clutch according to any preceding claim wherein the roller engaging portion of each spring is connected to the portion of the spring which is fixed to the said one of the races by means of relatively narrow arms.

7. A roller clutch according to any preceding claim wherein the surface of the spring directly engages the associated roller.

8. A roller clutch according to any preceding claim wherein the said one of the races is the inner race.

X

1

3    6

2    4    4

3

5    7

Fig 1
(Prior Art)

Y

A

11    14    15

10

12    14

12

A

13

Fig 2

Fig 3

Fig 4

Fig 5

Fig 6

Fig 7

Fig 8

Fig 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | DE-C- 885 331 (LORENZ)<br>* Whole document * | 1,2,5,7 | F 16 D 41/06 |
| Y | | 4,8 | |
| Y | FR-A-1 154 767 (PARIS ET RHÔNE)<br>* Whole document * | 4,8 | |
| A | | 7 | |
| X | DE-C- 506 772 (ZF)<br>* Whole document * | 1,2,7,8 | |
| X | FR-A-1 185 242 (SERMEC)<br>* Whole document * | 1,2,7,8 | |
| X | US-A-2 681 718 (STONER)<br>* Whole document * | 1,2,7,8 | |
| X | DE-A-1 804 177 (BORG-WARNER)<br>* Whole document * | 1,4 | |
| X | CH-A- 355 660 (VEKTOR)<br>* Whole document * | 1,5,7,8 | TECHNICAL FIELDS SEARCHED (Int. Cl.5) |
| A | | 2 | F 16 D 41/00 |
| X | DE-A-2 134 618 (SCHAEFFLER)<br>* Page 3; figure 3 * | 1,7 | |
| A | | 5 | |

The present search report has been drawn up for all claims

| Place of search | Date of completion of the search | Examiner |
|---|---|---|
| THE HAGUE | 22-09-1989 | BALDWIN D.R. |

EPO FORM 1503 03.82 (P0401)